Europäisches Patentamt

European Patent Office

Office européen des brevets

(19)

(11) Veröffentlichungsnummer : **0 352 512 B1**

# (12) EUROPÄISCHE PATENTSCHRIFT

(45) Veröffentlichungstag der Patentschrift :
04.12.91 Patentblatt 91/49

(51) Int. Cl.⁵ : **F16L 3/22**

(21) Anmeldenummer : **89112265.7**

(22) Anmeldetag : **05.07.89**

(54) Abstandshalter.

(30) Priorität : **26.07.88 DE 8809540 U**

(43) Veröffentlichungstag der Anmeldung :
**31.01.90 Patentblatt 90/05**

(45) Bekanntmachung des Hinweises auf die
Patenterteilung :
**04.12.91 Patentblatt 91/49**

(84) Benannte Vertragsstaaten :
**AT BE CH DE ES FR GB GR IT LI LU NL SE**

(56) Entgegenhaltungen :
**EP-A- 0 039 467**
**DE-B- 2 204 465**

(56) Entgegenhaltungen :
**DE-C- 605 213**
**DE-U- 7 617 565**
**DE-U- 8 028 930**
**DE-U- 8 129 873**
**US-A- 4 657 069**

(73) Patentinhaber : **BÖHM KUNSTSTOFFE GMBH**
**Kirchenlamitzerstrasse 8**
**W-8676 Schwarzenbach/Saale (DE)**

(72) Erfinder : **Böhm, Arthur**
**Kirchenlamitzerstrasse 8**
**W-8676 Schwarzenbach/Saale (DE)**

(74) Vertreter : **Reinhard, Skuhra, Weise**
**Postfach 44 01 51 Friedrichstrasse 31**
**W-8000 München 40 (DE)**

EP 0 352 512 B1

## Beschreibung

Die Erfindung betrifft einen Abstandshalter gemäß dem Oberbegriff des Patentanspruchs 1.

Ein Abstandshalter gemäß dem Oberbegriff des Patentanspruchs 1 ist aus dem DE-U-7617565 bzw. EP-A-0039467 bekannt. Dieser Abstandshalter eignet sich insbesondere zur Aufnmahme von Rohren aus Kunststoff oder dgl., deren Oberfläche vergleichbar hohe Festigkeit hat, so daß beim Einsetzen der Rohre in die Öffnungen die Rohroberfläche nicht beschädigt wird. Die Öffnungen dieses Abstandshalters sind dabei derart gewählt, daß die die Öffnungen begrenzenden Schenkel des Abstandshalters über einen 180° umfassenden Halbkreis hinwegverlaufen, d.h. gegenüber dem Mittelpunkt der kreisförmigen Öffnung vorstehen, derart, daß die die Öffnung festlegenden Verstärkungsrippen eine Kreisfläche festlegen, die 180° überschreitet, wobei der durch die Verstärkungsrippen festgelegte Winkelbereich der Öffnungen etwa bei 240° liegt. Dadurch ist beim Einsetzen der Rohre in die Öffnungen eine durch die Enden der die Öffnung festlegenden Schenkel bzw. Verstärkungsrippen erzeugte Klemmkraft zu überwinden, was bei Kunststoffrohren, die aus weicherem Material bestehen, zu Beschädigungen führt.

Der Neuerung liegt daher die Aufgabe zugrunde, einen Abstandshalter der eingangs genannten Art derart zu verbessern, daß er zur sicheren und einfachen Aufnahme von Kunststoffrohren aus einem Material weicherer Eigenschaft geeignet ist.

Diese Aufgabe wird neuerungsgemäß durch die im kennzeichnenden Teil des Schutzanspruchs 1 angegebenen Merkmale gelöst.

Weitere Ausgestaltungen ergeben sich aus den Unteransprüchen.

Der neuerungsgemäße Abstandshalter besteht aus Kunststoff und weist Verstärkungsrippen auf, welche die Öffnungen zur Aufnahme von Kunststoffrohren festlegen, wobei diese Rippen an ihren Enden über den Abstandshalter hinaus gezogen sind und daher federnde Aufnahmezungen bilden. Durch diese federnden Aufnahmezungen ist ein leichtes Einsetzen der Rohre ohne Beschädigung deren Rohroberfläche sichergestellt. Die durch die Federzungen ausgeübten Klemmkräfte reichen aus, um die eingesetzten Rohre sicher in den Öffnungen insbesondere gegen ein unbeabsichtigtes Entfernen der Rohre aus dem Abstandshalter zu fixieren.

Unter Bezugnahme auf die Zeichnung wird nachfolgend eine bevorzugte Ausführungsform des neuerungsgemäßen Astandshalters beschrieben. Es zeigen :

Fig. 1 eine Ansicht auf den neuerungsgemäßen Abstandshalter,

Fig. 2 eine Seitenansicht des Abstandshalters nach Fig. 1, und

Fig. 3 eine Draufsicht auf den Abstandshalter nach Fig. 1.

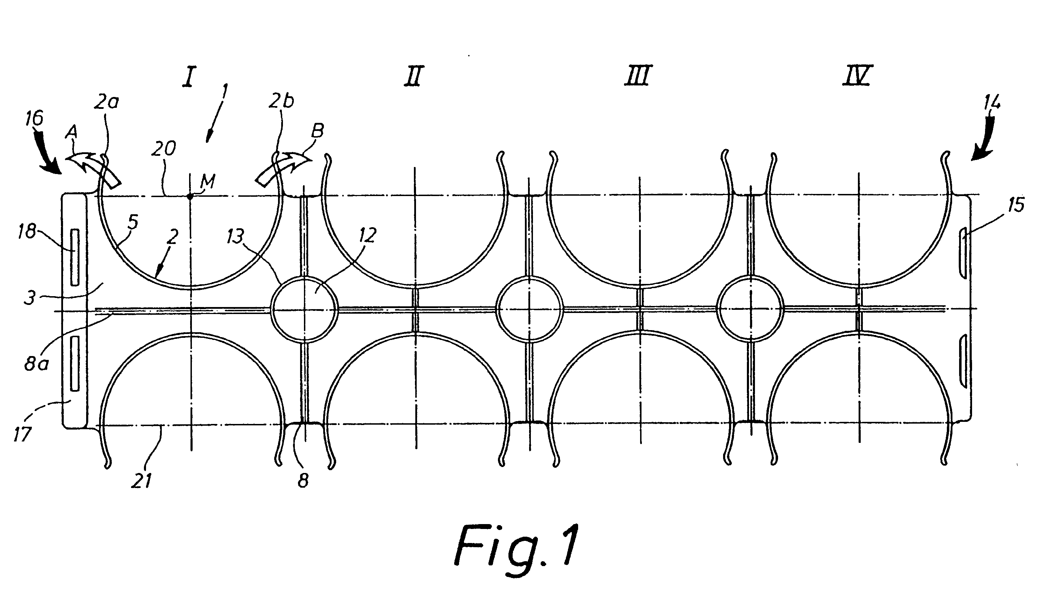

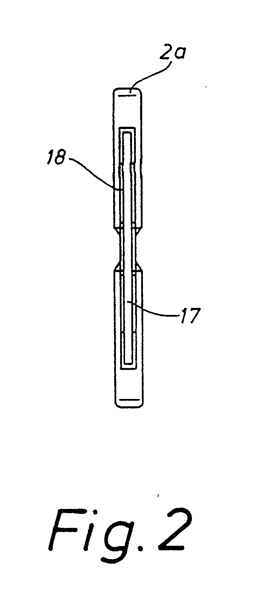

Der in Fig. 1 gezeigte Abstandshalter weist mehrere durch einen Teilkreis definierte Öffnungen 1 mit Aufnahmeflächen 2 auf, die durch Verstärkungsrippen 5 gebildet sind. Die Verstärkungsrippen 5 stehen im wesentlichen senkrecht zu dem aus Kunststoff hergestellten Körper 3 des Abstandshalters. Aus Fig. 1 und 2 ist ersichtlich, daß der Körper 3 des Abstandshalters eine geringere Materialstärke besitzt gegenüber der Breite der Verstärkungsrippen 2, beispielsweise eine Materialstärke von 10 mm, während die Verstärkungsrippen gemäß einer bevorzugten Ausführungsform eine Breite von 20 mm besitzen. Diese Verstärkungsrippen 2 gewährleisten damit einen festen Sitz und eine sichere Aufnahme der in die Öffnungen 1 einzusetzenden, nicht gezeigten Kunststoffrohre, die aus PVC oder in Form eines Verbundrohres aus PVC und PE hergestellt sind. Der neuerungsgemäße Abstandshalter wird vorzugsweise in PP-Spriztguß gefertigt.

Der Verlauf der Verstärkungsrippen 5 umfaßt gemäß Fig. 1 wie beim Stand der Technik nach dem DE-U-7617565 einen Teilkreis von vorzugsweise etwa 240°, wobei je Abstandshalter mehrere, gemäß der dargestellten Ausführungsform nach Fig. 1, vier Paare derartiger Öffnungen 1 vorgesehen sind. Die Zahl der Öffnungspaare kann ersichtlicherweise größer oder kleiner als in Verbindung mit Fig. 1 gezeigt sein.

Der Abstandshalter besteht nach der dargestellten Ausführungsform aus vier Abschnitten I, II, III, IV, wobei diese zueinander benachbarten Abschnitte I bis IV durch Schwächungslinien 8 oder entsprechende Stege 8 miteinander verbunden sind. Die Stege 8, die zwischen den benachbarten Abschnitten I und II, II und III usw. im wesentlichen vorzugsweise vertikal verlaufend ausgebildet sind sowie entsprechende mit 8a bezeichnete entlang der Mittelachse jedes Abstandselementes 3 verlaufende Stege 8a ermöglichen eine Trennung der Abstandselemente, d.h. es kann zum Beispiel von dem in Fig. 1 gezeigten Abstandselement der mit I bezeichnete Abschnitt auf einfache Weise entfernt werden, während durch die Stege 8a eine entlang der Mittelachse mögliche Trennung durch einfaches Trennen erreicht werden kann und damit der in Fig. 1 gezeigte Abstandshalter in zwei zueinander nicht symmetrische Teile aufgeteilt werden kann. Die Stege 8 bzw. 8a haben eine gegenüber der Materialstärke des Abstandshalterelementes 3 geringere Stärke, vorzugsweise 4 mm, wodurch ersichtlicherweise eine leichte Trennung der einzelnen Abschnitte gegeneinander realisierbar ist.

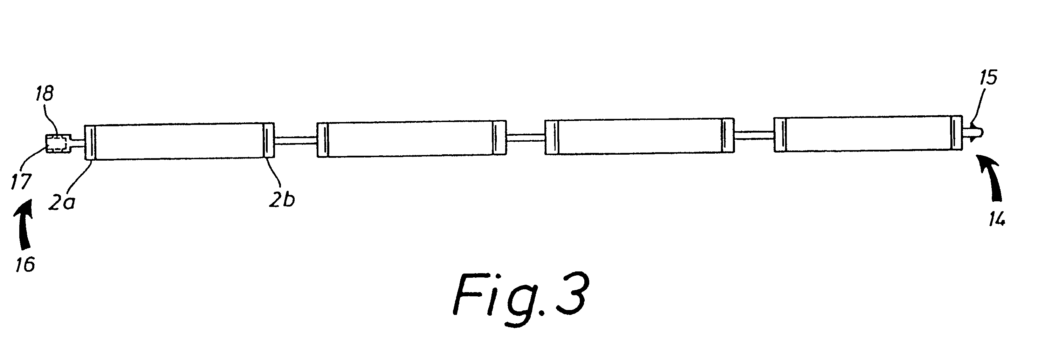

Aus vorstehender Beschreibung ist ersichtlich, daß die mechanische Verbindung zueinander benachbarter Abschnitte I bis IV durch die Verbindungsstege 8 bzw. 8a erreicht wird. Die Verstärkungsrippen 5 für die Aufnahmefläche 2 sind symmetrisch zur Längsmittelachse des Abstandshalters ausgebildet. Zwischen jedem Abschnitt I und II, II und III usw. ist mittig eine kreisförmige Aussparung 12 vorgesehen, die durch einen Versteifungskranz 13 definiert ist, wobei der Versteifungskranz 13 in Form einer Versteifungsrippe vorgesehen ist. Der Versteifungskranz 13 steht ebenso wie die Verstärkungsrippe 5 beidseitig vom Körper 3 des Abstandshalters weg, wie aus Fig. 2 und 3 ersichtlich ist. Zur Verbindung eines Abstandshalters gemäß Fig. 1 mit einem weiteren derartigen Abstandshalter sind in bekannter Weise an dem in Fig. 1 rechten Ende keilförmige Vorsprünge 15 ausgebildet, die beidseitig vom Grundkörper 3 abstehen. An dem anderen Ende 16 des Abstandshalters ist eine Nut 17 ausgebildet, die mit zueinander beabstandeten Schlitzen 18 versehen ist, und zwar derart, daß sie exakt der Größe und Höhe der Vorsprünge 15 entsprechen und ein weiterer Abstandshalter mit seinen Vorsprüngen 15 in die Ausnehmungen bzw. Schlitze 18 zum Zwecke der gegenseitigen Arretierung einschiebbar ist. Die Vorsprünge 15 und die Schlitze 18 ergeben somit eine Feder-Nut-Verbindung, wenn zwei derartige Abstandselemente seitlich zusammengesetzt sind.

Wesentlich bei dem in Fig. 1 gezeigten Abstandshalter ist, daß die Verstärkungsrippen 2 über die mit 20 bezeichnete Oberkante und die mit 21 bezeichnete Unterkante vorstehen, d.h., daß die Verstärkungsrippen 2 jeweils einen mit 2a und 2b bezeichneten federnden Abschnitt definieren, der gemäß einer bevorzugten Ausführungsform an seinem freien Ende geringfügig nach hinten umgebogen ist, wie dies aus Fig. 1 deutlich hervorgeht. Die Kanten 20, 21 verlaufen gemäß der Ausführungsform nach Fig. 1 durch die Mittelpunkte M der Teilkreise jeder Öffnung 1, während die federnden Abschnitte 2a, 2b soweit über den Halbkreis, festgelegt durch den Mittelpunkt M und die Kante 20 bzw. 21, vorstehen, daß die gesamte Öffnung 1 jeweils einen Teilkreis von etwa 240° festlegt. Beim Einschieben der nicht gezeigten Kunststoffrohre werden die Abschnitte 2a, 2b geringfügig in Richtung der Pfeile A, B zurückverlagert, so daß die Kunststoffrohre ohne hohe Klemmkraft und damit ohne Beschädigung ihrer Oberfläche in die Öffnungen 1 einsetzbar sind, wonach die Abschnitte 2a, 2b entgegen der Pfeile A, B zurück in eine Lage bewegt werden, die der in Fig. 1 gezeigten Position entspricht, mithin die Abschnitte 2a, 2b exakt auf der Kreislinie des um den Mittelpunkt M gezogenen Kreises zu liegen kommen, dessen Radius durch die Rippe 2 festgelegt ist.

Nach der in Fig. 3 dargestellten Ausführungsform sind die Stege 8 nicht bis zur Ober- bzw. Unterkante des Abstandselementes 3 verlaufend ausgebildet, sondern enden kurz vor der genannten Ober- bzw. Unterkante 20, 21. Hierdurch wird die Verbindung zwischen den einander benachbarten Abschnitten I, II usw. trotz des Vorhandenseins der Verbindungsstege 8 nicht geschwächt. Im Bedarfsfalle können jedoch die Verbindungsstege 8 durchgehend zwischen der Oberkante und Unterkante 20, 21 verlaufend vorgesehen sein. Gleiches gilt für den Verbindungssteg 8a, der kurz vor dem mit 16 und 14 bezeichneten stirnseitigen Ende des Abstandshalters endet, während er gemäß einer weiteren Ausführungsform auch vollständig bis zu den Stirnseiten durchgezogen sein kann. Das mit 18 bezeichnete Ende des Abstandshalters hat die Form einer Tasche zur Aufnahme des mit 15 bezeichneten Endes eines anderen Abstandshalters, während die mit 18 angegebenen Schlitze vorgesehen sind, um die vorspringenden Abschnitte 15 nach außen in eine Rastposition vorspringen zu lassen.

Wenngleich die mit 2a, 2b bezeichneten federartigen Abschnitte an ihrem Ende leicht zurückgebogen dargestellt sind, können die Abschnitte 2a, 2b an ihrem Ende auch leicht abgeschrägt verlaufen, so daß eine Zurückbiegung der in Fig. 1 gezeigten Art entfällt.

Der unter Bezugnahme auf die Fig. 1 bis 3 gezeigte Abstandshalter besteht somit aus mehreren Abschnitten I bis IV, wobei die Verstärkungsrippe 2 mit den Abschnitten 2a, 2b spiegelsymmetrisch zu den Verbindungsstegen 8 hinsichtlich der Abschnitte I, II usw. vorgesehen ist. Außerdem sind die Verstärkungsrippen 2 mit ihren Abschnittsn 2a, 2b spiegelsymmetrisch zu der mit 8a definierten Symmetrielinie vorgesehen.

## Patentansprüche

1. Abstandshalter aus Kunststoff mit in einer oberen und unteren Reihe angeordneten Öffnungen (1) zur Aufnahme von Rohren oder dergleichen, dessen Öffnungen durch Verstärkungsrippen (2) definiert sind, die sich über einen Teilkreis erstrecken, der größer ist als 180°, wobei die Verstärkungsrippen (2) als Auflagefläche für die Rohre vorgesehen sind, und die Öffnungen (1) in zueinander benachbarten Abschnitten (I, II, III, IV) ausgebildet sind, wobei der Abstandshalter eine Ober- und Unterkante (20, 21) aufweist, **dadurch gekennzeichnet,** daß die Ober- und Unterkante (20, 21) des Abstandshalters durch die Mittelpunkte (M) der die Öffnungen (1) festlegenden Kreise verlaufen, und daß die Verstärkungsrippen (2) über die Ober- und Unterkante (20, 21) hinaus verlaufen, so daß federnde Vorsprünge (2a, 2b) gebildet werden.

2. Abstandshalter nach Anspruch 1, dadurch gekennzeichnet, daß die Endabschnite (2a, 2b) im wesentlichen auf dem durch die Verstärkungsrippen (2) festgelegten Teilkreis liegen.

3. Abstandshalter nach Anspruch 1 oder 2, dadurch gekennzeichnet, daß die Endabschnitte (2a, 2b) an ihrem Ende gegenüber dem Teilkreis zurückgebogen sind.

4. Abstandshalter nach einem der vorangehenden Ansprüche, dadurch gekennzeichnet, daß die Endabschnitte (2a, 2b) zusammen mit dem zwischen ihnen liegenden Abschnitt der Verstärkungsrippe (2) einen Teilkreis von insgesamt etwa 240° festlegen.

## Claims

1. Spacer of synthetic material having apertures (1) arranged in an upper and lower row for receiving tubes or the like, the apertures of which are defined by enforcement ribs (2), which extend over a graduated circle which is greater than 180°, in which the enforcement ribs (2) are provided as supporting surfaces for the tubes and in which the apertures (1) are provided in sections (I, II, III, IV) adjacent to each other, and in which the spacer has an upper and lower edge (20, 21), characterized in that

the upper and lower edge (20, 21) of the spacer extend through the centers (M) of the circles defining the apertures (1), and

that the enforcement ribs (2) protrude beyond the upper and lower edges (20, 21) so that resilient projections are formed.

2. Spacer according to claim 1, characterized in that the end sections (2a, 2b) are substantially located on the graduated circle defined by the enforcement ribs (2).

3. Spacer according to claim 1 or 2, characterized in that the end sections (2a, 2b) are bent back at the end with respect to the graduated circle.

4. Spacer according to one of the preceeding claims, characterized in that the end sections (2a, 2b) together with the sections located between them define a graduated circle of in total approximately 240°.

## Revendications

1. Elément de maintien d'espacement, en matière plastique, comportant des ouvertures (1) disposées suivant une rangée supérieure et une rangée inférieure et servant à recevoir des tubes ou analogues, ces ouvertures étant délimitées par des nervures de renfort (2) qui s'étendent suivant un arc de cercle qui est supérieur à 180°, les nervures de renfort (2) étant prévues pour servir de surfaces d'appui aux tubes et les ouvertures (1) étant réalisées dans des sections (I, II, III, IV) contiguës l'une à l'autre, l'élément de maintien d'espacement comportant un bord supérieur (20) et un bord inférieur (21), caractérisé en ce que le bord supérieur (20) et le bord inférieur (21) de l'élément de maintien d'espacement passent par les centres (M) des cercles délimitant les ouvertures (1) et en ce que les nervures de renfort (2) s'étendent au-delà du bord supérieur (20) et du bord inférieur (21), de façon à former des saillies élastiques (2a, 2b).

2. Elément de maintien d'espacement suivant la revendication 1, caractérisé en ce que les saillies (2a, 2b) suivent pratiquement les arcs de cercle déterminés par les nervures de renfort (2).

3. Elément de maintien d'espacement suivant la revendication 1 ou 2, caractérisé en ce qu'à leur extrémité, les saillies (2a, 2b) sont incurvées vers l'arrière par rapport à l'arc de cercle.

4. Elément de maintien d'espacement suivant l'une des revendications précédentes, caractérisé en ce qu'en commun avec la partie de la nervure de renfort (2) située entre elles, les parties extrêmes (2a, 2b) s'étendent sur un arc de cercle égal dans l'ensemble à 240° environ.

*Fig.1*

EP 0 352 512 B1

Fig. 2

Fig.3

EP 0 352 512 B1